# FASCICULE DE BREVET EUROPEEN

(11) **EP 4 369 948 B1**
(45) Date de publication et mention de la délivrance du brevet: **29.01.2025**
(21) Numéro de dépôt: 22755243.7
(22) Date de dépôt: 08.07.2022
(51) Int. Cl.: A23L 29/256, A23K 50/90, A23K 20/163, A23K 20/24

(54) **PROCÉDÉ DE PRÉPARATION D'UN BLOC DE GEL**
VERFAHREN ZUR HERSTELLUNG EINES GELBLOCKS
METHOD FOR PREPARING A GEL BLOCK

(30) Priorité: 13.07.2021 FR 2107607
(43) Date de publication de la demande: 22.05.2024
(73) Titulaire: Ynsect, 91058 Évry-Courcouronnes Cedex (FR)
(72) Inventeur: SARTON DU JONCHAY, Thibault, 60710 CHEVRIÈRES (FR); KIRECHE, Adam, 94500 CHAMPIGNY-SUR-MARNE (FR); LAFFORGUE, Anthony, 91260 JUVISY SUR ORGE (FR); PERYCHOU, Fanny, 91200 ATHIS-MONS (FR)
(74) Mandataire: Santarelli
(86) Numéro de dépôt international: PCT/FR2022/051384
(87) Numéro de publication internationale: WO 2023/285757

(56) Documents cités:
- EP-A1- 0 697 176
- WO-A1-2018/122361
- FR-A5- 2 107 663
- US-B2- 10 544 665

## Description

La présente invention concerne un procédé de préparation d'un bloc de gel.

L'élevage d'animaux, et en particulier d'insectes, requiert un apport d'eau plus ou moins important selon les besoins nutritionnels des animaux. Cet apport d'eau doit pouvoir être contrôlé afin d'être ajusté selon les circonstances.

Généralement, les besoins en eau des insectes sont de l'ordre de 2 kg d'eau pour produire 1 kg d'insectes matures (larves prêtes à être abattues). A échelle industrielle, cela constitue donc des volumes d'eau importants qu'il est nécessaire de fournir et dont la gestion doit être correctement assurée. En effet, une mauvaise gestion de l'eau peut générer :
- soit une trop faible croissance dans le cas où la quantité d'eau serait insuffisante,
- soit un problème de mortalité accrue des insectes due principalement à l'augmentation du risque microbiologique dans le cas où la quantité d'eau serait trop importante Un apport d'eau sous forme de gel permet de pallier à ces inconvénients.

La demande WO2018/122360 décrit notamment un gel obtenu à partir de coproduits liquides de l'agro-industrie comme source d'eau et/ou de nutriments pour l'élevage d'insectes.

La demande WO2018/122361 concerne un procédé de production de blocs d'un gel aqueux, comportant notamment une étape de chauffage pour permettre la dissolution d'un gélifiant et une étape de refroidissement pour permettre la gélification.

Toutefois, ce type de gel et son procédé de préparation impliquent un temps de gélification non négligeable, ce qui impacte l'efficacité de la productivité. En outre, le gélifiant doit d'abord être chauffé pour être dissous dans un mélange, puis le mélange doit être refroidi pour permettre sa gélification, ces étapes de chauffage et de refroidissement impliquant la présence de dispositifs spécifiques supplémentaires (comme un circuit de refroidissement).

Il existe donc un besoin pour un procédé de préparation de gel qui soit rapide et simple à mettre en oeuvre.

### Résumé de l'invention

L'invention concerne un procédé de préparation d'un bloc de gel comprenant les étapes suivantes :
- fourniture d'une préparation d'alginate et de carbonate de calcium,
- fourniture d'une solution tampon,
- mélange de la préparation d'alginate et de carbonate de calcium avec la solution tampon à l'aide d'un té de mélange comprenant un conduit de sortie, puis
- gélification dans un gélificateur formé par le conduit de sortie et/ou un conduit raccordé au conduit de sortie, pour former un bloc de gel.

Avantageusement, le carbonate de calcium mis en oeuvre dans le procédé selon l'invention a une taille de particules inférieure à 40 µm.

Avantageusement, le ratio molaire alginate / carbonate de calcium mis en oeuvre dans le procédé selon l'invention est compris entre 0,2 et 1,8.

Avantageusement, le pH de la solution tampon mise en oeuvre dans le procédé selon l'invention est compris entre 3 et 6.

Avantageusement, le ratio volumique préparation d'alginate et de carbonate de calcium / solution tampon mis en oeuvre dans le procédé selon l'invention est compris entre 1 et 10. Avantageusement, dans le procédé selon l'invention, la préparation d'alginate et de carbonate de calcium et la solution tampon sont pompées en vue de leur mélange à l'aide d'une ou plusieurs pompes volumétriques.

Avantageusement, dans le procédé selon l'invention, le gélificateur est un conduit droit. Avantageusement, dans le procédé selon l'invention, le gélificateur est un conduit cylindrique.

Avantageusement, le procédé selon l'invention comprend en outre une étape de distribution, dans laquelle un bloc de gel sort du gélificateur et est déposé sur une surface de réception. Avantageusement, le procédé selon l'invention comprend en outre, à la sortie du gélificateur, une étape de découpe dans laquelle le gel est sectionné à des intervalles temporels ou de dimension prédéfinis.

D'autres particularités et avantages de l'invention apparaitront encore dans la description détaillée ci-après. Aux dessins annexés donnés à titre d'exemples non limitatifs :
- la figure 1 représente, selon un diagramme de bloc, un procédé de préparation d'un bloc de gel selon un mode de réalisation de l'invention ;
- la figure 2 représente, selon un diagramme de bloc, la préparation de boudins de gel selon un mode de réalisation de l'invention ; et,
- la figure 3 est un schéma d'une installation industrielle pouvant être mise en oeuvre dans un mode de réalisation de l'invention.

### Description détaillée

L'invention concerne un procédé de préparation d'un bloc de gel comprenant les étapes suivantes :
- fourniture d'une préparation d'alginate et de carbonate de calcium,
- fourniture d'une solution tampon,
- mélange de la préparation d'alginate et de carbonate de calcium avec la solution tampon à l'aide d'un té de mélange comprenant un conduit de sortie, puis
- gélification dans un gélificateur formé par le conduit de sortie et/ou un conduit raccordé au conduit de sortie, pour former un bloc de gel.

Par « bloc de gel », on vise une masse homogène de gel ayant avantageusement une épaisseur d'au moins 2 mm, préférentiellement d'au moins 5 mm.

De préférence, le bloc de gel a une épaisseur comprise entre 7 mm et 45 mm, plus préférentiellement, entre 10 mm et 35 mm, encore plus préférentiellement, entre 15 mm et 25 mm, tel que de l'ordre de 20 mm.

Dans la présente demande, sauf spécifié autrement, toutes les valeurs numériques données s'entendent bornes incluses.

Par « de l'ordre de X », on vise la valeur X plus ou moins 10%.

Avantageusement, le bloc de gel a une forme cylindrique (ou plus généralement prismatique, et se présente ainsi en boudins).

En particulier, le bloc de gel n'a pas une forme sphérique (ou bille).

Par « alginate », on entend la base conjuguée de l'acide alginique, de préférence sous forme de sel.

L'acide alginique est un polysaccharide formé par des résidus de l'acide D-mannuronique (M) et de l'acide L-guluronique (G). Il peut être notamment caractérisé par le ratio M/G, qui correspond à la proportion de résidus mannuroniques par rapport aux résidus guluroniques. Avantageusement, l'alginate a un ratio M/G compris entre 1,0 et 2,0, de préférence, compris entre 1,2 et 1,8, plus préférentiellement, compris entre 1,4 et 1,6, encore plus préférentiellement, égal à 1,4.

Avantageusement, l'alginate est sous forme de sel de cation monovalent, de préférence, l'alginate est de l'alginate de sodium ou de potassium, plus préférentiellement, de l'alginate de sodium.

De préférence, la teneur en alginate de la préparation d'alginate et de carbonate de calcium est comprise entre 0,20% et 0,50%, plus préférentiellement, comprise entre 0,25% et 0,45%, encore plus préférentiellement, comprise entre 0,30% et 0,40%, par exemple de l'ordre de 0,38%, les pourcentages étant des pourcentages en poids, sur le poids total de la préparation.

De préférence, lorsque l'alginate est l'alginate de sodium, la teneur en alginate de sodium de la préparation d'alginate et de carbonate de calcium est comprise entre 0,20% et 0,50%, plus préférentiellement, comprise entre 0,25% et 0,45%, encore plus préférentiellement, comprise entre 0,30% et 0,40%, par exemple de l'ordre de 0,38%, les pourcentages étant des pourcentages en poids, sur le poids total de la préparation.

Le procédé selon l'invention peut être réalisé selon un mode discontinu (« batch ») ou en continu. De préférence, le procédé est réalisé en continu.

Le procédé de préparation de gel selon l'invention est rapide. En particulier, il permet une diminution de la durée nécessaire à la gélification (par exemple, de l'ordre de quelques secondes). Il est également très simple à mettre en oeuvre. Notamment, aucune étape de chauffage ou de refroidissement n'est nécessaire.

De plus, les blocs de gel préparés selon le procédé selon l'invention présentent une faible synérèse afin d'éviter un relargage d'eau trop important et de mouiller l'environnement des insectes. La synérèse correspond à l'expulsion de liquide du gel. Elle est exprimée en pourcentage en poids du liquide expulsé par rapport au poids initial du gel. Une faible synérèse est en effet souhaitée pour éviter les risques d'engluage des insectes.

Le carbonate de calcium a l'avantage d'être compatible pour l'alimentation des animaux. De plus, les inventeurs ont déterminé que le carbonate de calcium permettait avantageusement d'éviter la pré-gélification de la préparation d'alginate et de carbonate de calcium avant le mélange avec la solution tampon.

Avantageusement, le carbonate de calcium mis en oeuvre dans le procédé selon l'invention a une taille de particules inférieure à 40 µm.

L'homme du métier sait comment déterminer une taille de particules, elle peut notamment être mesurée à l'aide d'un granulomètre. En particulier, lorsque la taille de particules est inférieure à X µm, cela signifie que toutes les particules passent à travers un tamis ayant des mailles de dimensions X µm.

De préférence, le carbonate de calcium a une taille de particules inférieure à 20 µm, plus préférentiellement, inférieure à 15 µm, encore plus préférentiellement, inférieure à 10 µm. L'utilisation de carbonate de calcium de faible taille de particules est particulièrement préférée lorsque le procédé selon l'invention est un procédé continu.

De préférence, la teneur en carbonate de calcium de la préparation d'alginate et de carbonate de calcium est comprise entre 0,10% et 0,40%, plus préférentiellement, comprise entre 0,15% et 0,35%, encore plus préférentiellement, comprise entre 0,15% et 0,25%, par exemple de l'ordre de 0,18%, les pourcentages étant des pourcentages en poids, sur le poids total de la préparation.

Avantageusement, le ratio molaire alginate (seul, sans contre-ion) / carbonate de calcium est compris entre 0,2 et 1,8, de préférence, entre 0,4 et 1,4, plus préférentiellement, entre 0,5 et 1,3, encore plus préférentiellement, entre 0,6 et 1,2.

Pour calculer ce ratio molaire, il est considéré que l'alginate (seul, sans contre-ion) a une masse molaire égale à 176 g/mol (correspondant à un monomère de mannuronate ou de guluronate).

Avantageusement, l'alginate mis en oeuvre dans le procédé selon l'invention est l'alginate de sodium.

Avantageusement, le ratio en poids d'alginate de sodium / carbonate de calcium est supérieur ou égal à 1.

De préférence, le ratio en poids alginate de sodium / carbonate de calcium est compris entre 1 et 5, plus préférentiellement entre 1 et 3, par exemple de l'ordre de 2.

Avantageusement, la préparation d'alginate et de carbonate de calcium comprend en outre un agent bactériostatique. Un agent bactériostatique est une substance qui arrête la prolifération des bactéries. De préférence, l'agent bactériostatique est l'acide propanoïque. De préférence, la teneur en agent bactériostatique de la préparation d'alginate et de carbonate de calcium est comprise entre 0,05% et 0,40%, plus préférentiellement, comprise entre 0,10% et 0,35%, encore plus préférentiellement, comprise entre 0,15% et 0,30%, par exemple de l'ordre de 0,25%, les pourcentages étant des pourcentages en poids, sur le poids total de la préparation.

La préparation d'alginate et de carbonate de calcium peut en outre comprendre un agent nutritif, l'agent nutritif étant soluble dans la préparation.

Par « agent nutritif », on entend une substance organique ou minérale utilisée par un organisme pour vivre, notamment des vitamines et/ou des minéraux.

Avantageusement, la préparation d'alginate et de carbonate de calcium est obtenue par mélange des composés la constituant (notamment alginate et carbonate de calcium, optionnellement agent bactériostatique) avec de l'eau, de préférence avec de l'eau du robinet. De préférence, le mélange s'effectue dans une cuve dotée d'un agitateur. Avantageusement, la teneur en eau de la préparation d'alginate et de carbonate de calcium est supérieure à 95%, de préférence supérieure à 96%, plus préférentiellement, comprise entre 97% et 99,5%, encore plus préférentiellement, comprise entre 98% et 99,5%, par exemple de l'ordre de 99%, les pourcentages étant des pourcentages en poids, sur le poids total de la préparation.

La préparation d'alginate et de carbonate de calcium est stable, c'est-à-dire qu'il n'est pas observé de début de gélification.

Par « solution tampon », on entend une solution aqueuse permettant de maintenir un pH approximativement constant lorsque de faibles quantités d'acide ou de base sont ajoutées, ou lors d'une dilution.

Avantageusement, le pH de la solution tampon mise en oeuvre dans le procédé selon l'invention est compris entre 3 et 6.

De préférence, le pH de la solution tampon est compris entre 3,5 et 5,5, plus préférentiellement, entre 4,0 et 5,0, tel que par exemple de l'ordre de 4,8. Avantageusement, la solution tampon peut être commerciale ou préparée à la demande. Elle est usuellement composée d'un acide et d'une base. Préférentiellement, l'acide est de l'acide acétique et la base de l'hydroxyde de sodium. Optionnellement, un agent bactériostatique peut être ajouté à la solution tampon. De préférence, la solution tampon est constituée d'eau, d'acide acétique et d'hydroxyde de sodium, optionnellement avec un agent bactériostatique. L'agent bactériostatique est de préférence l'acide propanoïque. Avantageusement, la teneur en agent bactériostatique de la solution tampon est comprise entre 0,05% et 0,40%, plus préférentiellement, comprise entre 0,10% et 0,35%, encore plus préférentiellement, comprise entre 0,15% et 0,30%, par exemple de l'ordre de 0,25%, les pourcentages étant des pourcentages en poids, sur le poids total de la solution tampon.

La solution tampon peut en outre comprendre un agent nutritif, l'agent nutritif étant soluble dans la solution tampon.

Avantageusement, la solution tampon est préparée par mélange des composés mentionnés ci-dessus (notamment acide et base, optionnellement agent bactériostatique) avec de l'eau, de préférence avec de l'eau du robinet. De préférence, le mélange s'effectue dans une cuve dotée d'un agitateur.

L'obtention de la solution tampon et de la préparation d'alginate et de carbonate de calcium peut se faire l'une après l'autre dans un ordre indifférent, ou parallèlement. Avantageusement, le ratio volumique préparation d'alginate et de carbonate de calcium / solution tampon mis en oeuvre dans le procédé selon l'invention est compris entre 1 et 10. De préférence, le ratio volumique préparation d'alginate / solution tampon est compris entre 2 et 8, plus préférentiellement, entre 3 et 6, encore plus préférentiellement, de l'ordre de 4. Avantageusement, la préparation d'alginate et de carbonate de calcium et la solution tampon sont soutirées simultanément de leurs cuves de préparation respectives lors d'une étape de soutirage. Leur soutirage peut être réalisé à l'aide d'une ou plusieurs pompes. Par exemple, le soutirage de la préparation d'alginate et de carbonate de calcium peut être réalisé à l'aide d'une première pompe. Le soutirage de la solution tampon peut être réalisé à l'aide d'une deuxième pompe.

Avantageusement, dans le procédé selon l'invention, la préparation d'alginate et de carbonate de calcium et la solution tampon sont pompées en vue de leur mélange à l'aide d'une ou plusieurs pompes volumétriques.

La ou les pompes volumétriques sont préférentiellement des pompes rotatives, plus préférentiellement, des pompes à vis excentrée ou des pompes à lobes, encore plus préférentiellement, des pompes à vis excentrée. La pression de refoulement des pompes peut être ajustée suivant l'échelle de production de gel. Par exemple, pour une production de plusieurs dizaines de kilogrammes par heure de gel, leur pression de refoulement est de préférence de 2.10⁵ Pa ou plus.

La préparation d'alginate et de carbonate de calcium et la solution tampon soutirées sont ensuite mélangées de sorte à obtenir un mélange homogène. Ce mélange est réalisé en un temps bref, par exemple de l'ordre de 0,1s.

Cette étape de mélange est réalisée par un té de mélange (parfois également appelé « T de mélange »). Le té de mélange consiste essentiellement en une tubulure comportant deux conduits d'entrée et un conduit de sortie, formant un collecteur. Les conduits d'entrée du té de mélange sont respectivement employés pour l'introduction dans ledit té de mélange de la préparation d'alginate et de carbonate de calcium et de la solution tampon.

Un conduit peut être raccordé au conduit de sortie du té de mélange.

Avantageusement, le conduit de sortie du té de mélange est dans la même direction que le conduit d'entrée de la solution tampon, et perpendiculaire au conduit d'entrée de la préparation d'alginate et de carbonate de calcium.

Avantageusement, les conduits du té de mélange ont un diamètre compris entre 1 et 5 mm. Le té de mélange est alors appelé mélangeur capillaire. Le diamètre du capillaire (conduit) est adapté au débit utilisé ; par exemple, 2 mm pour 35 L/h.

Avantageusement, dans le procédé selon l'invention, le gélificateur est un conduit droit.

La gélification débute dès le mélange de la préparation d'alginate et de carbonate de calcium avec la solution tampon. Avantageusement, le gélificateur ne comprend aucun élément susceptible de perturber la formation du gel, ou de casser le gel formé, comme le ferait par exemple un mélangeur statique.

La gélification est ainsi réalisée en continu, à mesure que mélange de la préparation d'alginate et de carbonate de calcium et de la solution tampon est réalisé dans le té de mélange. Ceci permet d'obtenir un bloc de gel rapidement.

Ainsi, la gélification intervient dans le conduit de sortie du té de mélange et/ou dans un conduit raccordé au conduit de sortie du té de mélange. Le conduit de sortie et/ou le conduit raccordé forment ainsi un gélificateur.

De ce fait, la longueur minimale du gélificateur est adaptée au temps nécessaire à la gélification, de sorte que le temps de transport dans le gélificateur soit au moins égal au temps nécessaire à la gélification.

Par exemple, pour un temps de gélification d'environ 3 s et une vitesse de distribution de gel de 1 m/s, la longueur du gélificateur est d'au moins 3m.

Avantageusement, dans le procédé selon l'invention, le gélificateur est un conduit cylindrique.

Avantageusement, le gélificateur est un conduit cylindrique ayant un diamètre (constant) d'au moins 2 mm, préférentiellement 5 mm. Ceci permet d'obtenir un bloc de gel de forme cylindrique (ou boudin). En effet, le gel prend la forme intérieure du conduit cylindrique, et se présente donc sous la forme d'un cylindre continu du diamètre interne du conduit.

De préférence, le conduit cylindrique a un diamètre compris entre 7 mm et 45 mm, plus préférentiellement, entre 10 mm et 35 mm, encore plus préférentiellement, entre 15 mm et 25 mm, tel que de l'ordre de 20 mm.

Avantageusement, le procédé selon l'invention comprend en outre une étape de distribution, dans laquelle un bloc de gel sort du gélificateur et est déposé sur une surface de réception. Avantageusement, la surface de réception peut être formée d'une bande de largeur supérieure à l'épaisseur du bloc de gel. Par exemple, lorsque le gélificateur est un conduit cylindrique ayant un diamètre de l'ordre de 20 mm, la bande a de préférence une largeur de l'ordre de 5 cm.

En outre, la sortie du gélificateur et la surface de réception sont avantageusement en mouvement l'une par rapport à l'autre, ce mouvement relatif pouvant être obtenu par défilement de surface de réception sous la sortie du gélificateur et/ou par translation du gélificateur au-dessus de la surface de réception. Le mouvement relatif entre la sortie du gélificateur et la surface de réception correspond de préférence à la vitesse de sortie du gel, afin de ne pas créer de contraintes excessives dans le gel par étirement ou compression. Avantageusement, le procédé selon l'invention comprend en outre, à la sortie du gélificateur, une étape de découpe dans laquelle le gel est sectionné à des intervalles temporels ou de dimension prédéfinis.

Des blocs de gel ayant une longueur souhaitée sont ainsi formés.

Ainsi, lorsque qu'un conduit cylindrique est utilisé pour la gélification, des blocs de gel sous forme de boudins de longueur souhaitée sont obtenus.

Dans un mode de réalisation, la section est réalisée par un simple arrêt de la distribution du gel. Ce mode de réalisation est avantageux lorsque le bloc de gel a des faibles dimensions, par exemple d'une épaisseur inférieure à 45 mm, permettant sa section sous le seul effet du mouvement relatif entre la sortie du dispositif et la surface de réception.

Dans un autre mode de réalisation, un système de découpe automatisé (par exemple à l'aide d'une lame ou d'un fil coupant) adapté à sectionner le gel est utilisé. Le système de découpe est avantageusement situé directement à la sortie du gélificateur.

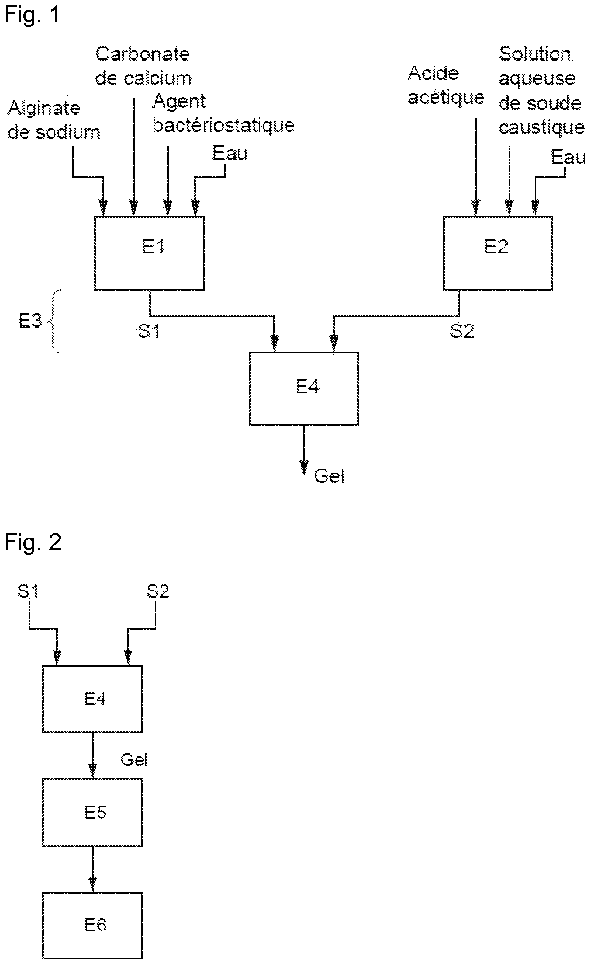

La figure 1 représente schématiquement un procédé de préparation d'un gel conforme à un mode de réalisation de l'invention.

Dans une étape d'obtention d'une préparation d'alginate et de carbonate de calcium E1, on mélange dans une cuve dotée d'un agitateur :
de l'alginate tel que de l'alginate de sodium ;
du carbonate de calcium ;
optionnellement, un agent bactériostatique ; et
de l'eau ;
dans des quantités telles que définies ci-avant.

L'agitateur permet avantageusement d'éviter la décantation du carbonate de calcium insoluble.

On obtient ainsi une préparation stable d'alginate et de carbonate de calcium S1, c'est-à-dire qu'il n'est pas observé de début de gélification.

Dans une étape d'obtention d'une solution tampon E2, on mélange dans une seconde cuve dotée d'un agitateur :
un acide tel que par exemple de l'acide acétique ;
une base, telle qu'une solution aqueuse de soude caustique ; et
de l'eau ;
dans des quantités permettant l'obtention d'une solution tampon.

On obtient ainsi une solution tampon S2 préparée directement dans la cuve.

Les cuves utilisées pour la préparation d'alginate et de carbonate de calcium S1 et de la solution tampon S2 peuvent avantageusement avoir un volume adapté au ratio volumique préparation d'alginate et de carbonate de calcium / solution tampon. Par exemple, pour un ratio volumique préparation d'alginate et de carbonate de calcium / solution tampon égal à 4, la cuve pour la préparation d'alginate et de carbonate de calcium S1 a un volume environ 4 fois supérieur à celui de la cuve pour la solution tampon S2, tel qu'environ 400 L pour la cuve de préparation d'alginate et de carbonate de calcium S1 et environ 100 L pour la cuve de solution tampon S2.

L'étape d'obtention d'une préparation d'alginate et de carbonate de calcium E1 et l'étape d'obtention d'une solution tampon E2 peuvent être menées l'une après l'autre dans un ordre indifférent, ou parallèlement (notamment simultanément).

Dans une étape de soutirage E3, on soutire simultanément de la préparation d'alginate et de carbonate de calcium S1 et de la solution tampon S2 de leurs cuves de préparation respectives. Le soutirage de la préparation d'alginate et de carbonate de calcium S1 peut être réalisé à l'aide d'une première pompe. Le soutirage de la solution tampon S2 peut être réalisé à l'aide d'une deuxième pompe.

La première pompe et la deuxième pompe sont avantageusement des pompes volumétriques. Des pompes à vis excentrée ayant une pression de refoulement d'environ 2.10⁵ Pa ont été utilisées avec succès.

Dans une étape de mélange E4, la préparation d'alginate et de carbonate de calcium S1 et la solution tampon S2 soutirées sont mélangées de sorte à obtenir un mélange homogène. Ce mélange est réalisé en un temps bref, de l'ordre de 0,1s.

Ce mélange est réalisé dans un té de mélange ayant deux conduits d'entrée et un seul conduit de sortie.

Le conduit de sortie du té de mélange est avantageusement orienté dans la même direction que le conduit d'entrée de la solution tampon S2, et perpendiculaire au conduit d'entrée de la préparation d'alginate et de carbonate de calcium S1.

La gélification débute dès le mélange de la préparation d'alginate et de carbonate de calcium S1 et de la solution tampon S2.

La gélification est ainsi réalisée en continu, à mesure que mélange de la préparation d'alginate et de carbonate de calcium S1 et de la solution tampon S2 est réalisé dans le té de mélange.

La gélification complète a typiquement une durée d'environ 2 à 5s. La longueur du conduit de sortie est adaptée de manière à ce que la gélification puisse intervenir dans le conduit de sortie du té de mélange et/ou dans un éventuel conduit raccordé au conduit de sortie du té de mélange. Le conduit de sortie et/ou le conduit raccordé forment ainsi un gélificateur. La gélification a été réalisée avec succès dans un tube de cylindrique ayant un diamètre (constant) de 20 mm. Pour les applications envisagées de l'invention, un tube d'un diamètre compris entre 15 mm et 25 mm pourra notamment être employé.

Il est bien évident que le procédé de préparation d'un gel est décrit ci-avant à titre d'exemple et peut être adapté sans sortir du cadre de la présente invention.

Notamment, un stockage intermédiaire de la solution d'alginate et de carbonate de calcium S1 entre sa cuve de préparation et son soutirage en vue de l'étape de mélange peut être réalisé. De même, un stockage intermédiaire de la solution tampon S2 entre sa cuve de préparation et son soutirage en vue de l'étape de mélange peut être réalisé.

En outre, le procédé d'obtention de gel objet de la présente invention peut être réalisé avec une solution de carbonate de calcium S1 et/ou une solution tampon (S2) préalablement préparées, de sorte que l'étape de préparation d'une solution d'alginate et de carbonate de calcium E1 et l'étape de préparation d'une solution tampon (E2) sont optionnelles.

La figure 2 représente schématiquement un procédé de préparation de boudins de gel pouvant être mis en oeuvre dans le cadre de la présente invention.

Une préparation d'alginate et de carbonate de calcium S1 et une solution tampon S2 sont fournies. La préparation d'alginate et de carbonate de calcium S1 et une solution tampon S2 sont mélangés dans une étape de mélange E4.

La fourniture de S1 et S2 et leur mélange peut être réalisée conformément à l'exemple de mode de réalisation décrit en référence à la figure 1.

Suite à l'étape de mélange, un gel est formé et progresse dans un conduit en sortie du té utilisé pour l'étape de mélange E4 (c'est-à-dire dans le conduit de sortie du té de mélange et/ou dans un conduit qui lui est directement raccordé). La gélification a été réalisée avec succès dans un conduit cylindrique ayant un diamètre (constant) de 20 mm. Le gel prend ainsi la forme intérieure de ce conduit, et se présente sous la forme d'un cylindre continu du diamètre interne du conduit.

Dans une étape de distribution E5, le bloc de gel ainsi formé sort du conduit dans lequel il a été formé, et est déposé sur une surface de réception. La surface de réception peut être formée d'une bande (c'est-à-dire une surface pleine, rectiligne et allongée), par exemple d'une bande d'une largeur de l'ordre de 5cm. La sortie du conduit et la surface de réception sont avantageusement en mouvement l'une par rapport à l'autre. Ce mouvement relatif peut être obtenu par défilement de surface de réception sous la sortie du conduit et/ou par translation du conduit au-dessus de la surface de réception. Le mouvement relatif entre la sortie du conduit et la surface de réception a de préférence une vitesse égale à la vitesse de sortie du gel, afin de ne pas créer de contraintes excessives dans le gel par étirement ou compression.

Dans une étape de découpe E6 le bloc de gel est sectionné, à des intervalles temporels ou de dimension prédéfinis. Pour ce faire, la section est réalisée par exemple par un simple arrêt de la distribution du bloc de gel. Ses faibles dimensions permettent sa section sous le seul effet du mouvement relatif entre la sortie du dispositif et la surface de réception. Alternativement, un système de découpe automatisé (par exemple à l'aide d'une lame ou d'un fil coupant) adapté à sectionner le bloc de gel est utilisé. Le système de découpe est situé directement à la sortie du conduit dans lequel le gel est formé.

Des boudins de gel ayant une longueur souhaitée sont ainsi formés. Ces boudins sont suffisamment solides pour ne pas se désagréger sous leur propre poids. En outre, la synérèse observée après 1h à température ambiante est inférieure à 10%. La synérèse est évaluée en mesurant la masse d'eau libre après avoir retiré le boudin de gel avec une balance de précision.

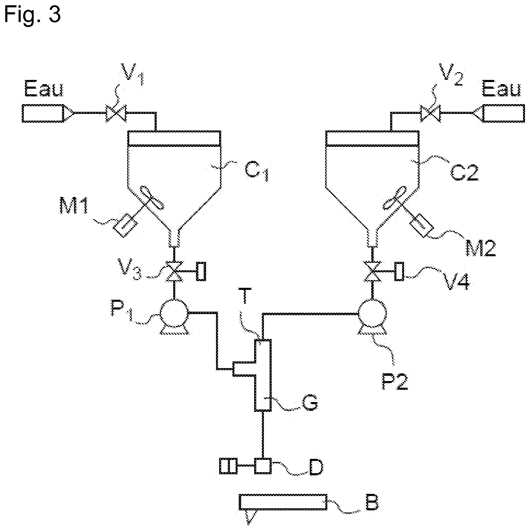

Le procédé selon l'invention peut être mis en oeuvre à l'échelle industrielle, par exemple avec une installation industrielle telle que celle représentée sur la figure 3.

L'installation représentée à la figure 3 comporte deux cuves, à savoir une première cuve C1 et une seconde cuve C2. La première cuve C1 comporte un premier mélangeur M1. La deuxième cuve C2 comporte un deuxième mélangeur M2.

La première cuve C1 est utilisée pour réaliser la préparation d'alginate et de carbonate de calcium S1. La deuxième cuve C2 est utilisée pour réaliser la solution tampon S2.

Pour l'obtention de la préparation d'alginate et de carbonate de calcium, l'apport d'eau peut être réalisé dans la première cuve C1 à l'aide d'une première vanne de dosage V1 située sur un réseau d'eau. L'alginate, le carbonate de calcium, et optionnellement l'agent bactériostatique, peuvent être apportés manuellement dans la première cuve C1, ou à l'aide de dispositifs de dosage adaptés.

Pour l'obtention de la solution tampon S2, l'apport d'eau peut être réalisé dans la deuxième cuve C2 à l'aide d'une deuxième vanne de dosage V2 située sur le réseau d'eau. L'acide et la base de la solution tampon, et optionnellement l'agent bactériostatique, peuvent être apportées manuellement dans la deuxième cuve C2, ou à l'aide de dispositifs de dosage adaptés.

Le premier mélangeur M1 et le deuxième mélangeur M2 permettent respectivement d'homogénéiser la préparation d'alginate et de carbonate de calcium et la solution tampon S2.

L'installation comporte une première vanne de soutirage V3 permettant de soutirer le contenu de la première cuve C1, à savoir de la préparation d'alginate et de carbonate de calcium. L'installation comporte par ailleurs une deuxième vanne de soutirage V4 permettant de soutirer le contenu de la deuxième cuve C2, à savoir de la solution tampon.

Dans l'exemple d'installation représenté à la figure 3, une première pompe P1 est employée pour soutirer le contenu de la première cuve C1 et pour mettre en pression le produit situé en aval de ladite première pompe P1. Une deuxième pompe P2 est employée pour soutirer le contenu de la deuxième cuve C2 et pour mettre en pression le produit situé en aval de ladite deuxième pompe P2.

La première pompe P1 et la deuxième pompe P2 sont avantageusement des pompes volumétriques telles que définies ci-avant. L'emploi de pompes volumétriques rotatives, par exemple de pompes à vis excentrée, est préféré.

La préparation d'alginate et de carbonate de calcium S1 et la solution tampon S2 se rencontrent dans un té de mélange T.

La gélification a lieu très rapidement suite à la rencontre et au mélange de la préparation d'alginate et de carbonate de calcium S1 et la solution tampon S2, en sortie du té de mélange T dans un conduit droit formant un gélificateur G.

En sortie de l'installation, un système de découpe automatisé D peut être prévu (par exemple un système de découpe à lame ou fil coupant). Le système de découpe automatisé D permet de sectionner les blocs de gel à la longueur souhaitée, lors de leur distribution. La distribution des blocs de gel est avantageusement réalisée directement dans des contenants d'élevage (tels que des bacs ou des caisses, ou autres récipients adaptés) qui contiennent des animaux, à savoir préférentiellement des insectes rampants ou essentiellement rampants, ou des larves d'insectes.

Pour ce faire, l'installation représentée à la figure 3 comporte en outre un système de transport de contenants d'élevage, comportant par exemple un convoyeur à bande B. Le défilement du convoyeur à bande B est de préférence synchronisé à la vitesse de sortie du gel, de sorte à éviter de créer des forces de traction, compression, ou cisaillement, dans le gel lors de sa distribution. Ainsi, la vitesse de défilement du convoyeur à bande est la même que la vitesse de sortie du gel, au moins pendant la distribution d'un bloc de gel dans un contenant transporté par le convoyeur à bande B.

Le procédé selon l'invention permet donc l'obtention de blocs de gel très rapidement et simplement, et peut notamment être mis en oeuvre à une échelle industrielle. En outre, la mise en oeuvre du procédé est facilitée, car la gélification ne nécessite pas d'étapes de chauffage et de refroidissement. Les installations industrielles nécessaires à la réalisation du procédé proposé dans l'invention sont en conséquence simples et fiables.

Par ailleurs, le procédé selon l'invention permet la formation d'un gel produit *in situ* et distribué sous forme de bloc à la demande, et en continu. Comparativement à certains procédés connus pour l'apport en eau sous forme de gel dans un élevage, la manutention du gel et son stockage sont éliminés, ce qui supprime de fait les problématiques associées, notamment de contamination ou de pourrissement. De plus, dans le cadre d'un élevage d'animaux, par exemple d'insectes, la taille des blocs en sortie peut être adaptée à leurs besoins, et les blocs peuvent être fournis en continu.

Outre l'élevage d'insectes, le gel produit peut être avantageusement utilisé pour la stabilisation des jus de fruits et légumes, la gélification des fonds de sauce, la gélification des crèmes glacées et sorbets, l'ajustement de la viscosité des desserts lactés, dans des barres gélifiées enrichies en protéines (par exemple alicaments, nourriture pour hôpitaux etc.), en remplacement du sucre lorsque celui-ci est incorporé pour texturer un produit (par exemple confiture ou gelée de fruit) afin de conserver cette texture en réduisant la quantité de sucre, ou dans des fourrages et/ou garnitures (avant-produit pâtissier) des produits d'épicerie qui contiennent des gels aromatisés (par exemple au chocolat ou au fruit).

La présente invention est illustrée, de manière non limitative, par l'exemple ci-après.

### Exemple 1 : Mise en oeuvre du procédé selon un mode de réalisation de l'invention à une échelle pilote

### Obtention d'une préparation d'alginate et de carbonate de calcium

De l'alginate de sodium ayant un ratio M/G (proportion de résidus mannuroniques par rapport aux résidus guluroniques) de 1,4 est utilisé.

La taille des particules du carbonate de calcium utilisé est inférieure à 10 µm, en particulier, 98% des particules ont une taille inférieure à 5,0 µm et 50% ont une taille inférieure à 1,5 µm.

L'agent bactériostatique est l'acide propanoïque.

Ces ingrédients sont mélangés avec de l'eau du robinet dans les proportions indiquées dans le Tableau 1 ci-dessous. La préparation d'alginate et de carbonate de calcium obtenue a un pH neutre (compris entre 6,5 et 7,5).

**[Tableau 1]**

| **Ingrédient** | **Teneur(%)** |
|---|---|
| Alginate (sans sodium) | 0,375 |
| CaCOs | 0,175 |
| Agent bactériostatique | 0,25 |
| Eau | 99,2 |

Tableau 1 : Composition de la préparation d'alginate et de carbonate de calcium, les pourcentages étant des pourcentages en poids, sur le poids total de la préparation Le ratio molaire alginate (sans contre-ion) / carbonate de calcium dans la composition du Tableau 1 est de 1,2.

### Obtention de la solution tampon

De l'acide acétique à une concentration massique de 80% et une solution aqueuse de soude caustique à 50% en poids sont mélangés avec de l'eau dans les proportions indiquées dans le Tableau 2 ci-dessous.

**[Tableau 2]**

| **Ingrédient** | **Teneur(%)** |
|---|---|
| Acide acétique 80% | 0,85 |
| Solution aqueuse NaOH 50% | 0,55 |
| Eau | 98,6 |

Tableau 2 : Composition de la solution tampon, les pourcentages étant des pourcentages en poids, sur le poids total de la solution

On obtient ainsi une solution tampon dont le pH est 4,76.

### Obtention du gel à partir des compositions ci-dessus

Un gel est obtenu par mélange de la préparation d'alginate et de carbonate de calcium avec la solution tampon dans un ratio volumique 4 :1.

Pour cela, un mélange homogène est réalisé en 0,1s ou moins.

La durée de gélification obtenue est d'environ 3s.

### Procédé de préparation du gel

Le procédé de préparation du gel est réalisé conformément à la description ci-avant du procédé objet des figures 1 et 2.

Dans une étape d'obtention d'une préparation d'alginate et de carbonate de calcium E1 (voir figure 1), on mélange dans une cuve de 400 L dotée d'un agitateur :
- de l'alginate de sodium ;
- du carbonate de calcium ;
- l'agent bactériostatique ; et
de l'eau ;
conformément au Tableau 1 ci-dessus.

On obtient ainsi une préparation stable d'alginate et de carbonate de calcium S1, c'est-à-dire qu'il n'est pas observé de début de gélification.

Dans une étape d'obtention d'une solution tampon E2, on mélange dans une seconde cuve de 100 L dotée d'un agitateur :
de l'acide acétique ;
une solution aqueuse de soude caustique ; et
   de l'eau ;
conformément au Tableau 2 ci-dessus.

On obtient ainsi une solution tampon S2 préparée directement dans la cuve.

Dans une étape de soutirage E3, on soutire simultanément de la préparation d'alginate et de carbonate de calcium S1 et de la solution tampon S2 de leurs cuves de préparation respectives. Le soutirage de la préparation d'alginate et de carbonate de calcium S1 est réalisé à l'aide d'une première pompe et le soutirage de la solution tampon S2 est réalisé à l'aide d'une deuxième pompe, comme décrit ci-avant.

Dans une étape de mélange E4, la préparation d'alginate et de carbonate de calcium S1 et la solution tampon S2 soutirées sont mélangées de sorte à obtenir un mélange homogène. Ce mélange est réalisé en un temps bref, de l'ordre de 0,1s.

Ce mélange est réalisé par le té de mélange décrit ci-avant.

La gélification débute dès le mélange de la préparation d'alginate et de carbonate de calcium S1 et de la solution tampon S2.

La gélification est ainsi réalisée en continu, à mesure que mélange de la préparation d'alginate et de carbonate de calcium S1 et de la solution tampon S2 est réalisé dans le té de mélange.

Comme précédemment indiqué, dans le cadre du présent exemple 1, la gélification complète a une durée d'environ 3s. De plus, la vitesse de distribution du gel est de 1m/s et la longueur minimale du conduit de sortie est de 3 m. Ainsi, la gélification intervient dans le conduit de sortie du té de mélange et/ou dans un conduit raccordé au conduit de sortie du té de mélange. Le conduit de sortie et/ou le conduit raccordé forment ainsi un gélificateur. La gélification a été réalisée avec succès dans un tube de cylindrique ayant un diamètre (constant) de 20 mm.

Le gel prend ainsi la forme intérieure de ce conduit, et se présente sous la forme d'un cylindre continu du diamètre interne du conduit.

Dans une étape de distribution E5 (voir figure 2), le gel sort du conduit dans lequel il a été formé, et est déposé sur une bande d'une largeur de l'ordre de 5cm comme surface de réception.

Dans une étape de découpe E6, le gel est sectionné, à des intervalles temporels ou de dimension prédéfinis. Ces boudins sont suffisamment solides pour ne pas se désagréger sous leur propre poids. En outre, la synérèse observée après 1h est inférieure à 10%. La synérèse est évaluée à température ambiante (environ 20°C), en mesurant la masse d'eau libre après avoir retiré le boudin de gel avec une balance de précision.

Le procédé ci-avant a été mené avec succès pour la production de 36 kg/h et de 75 kg/h de blocs de gel.

Des résultats préliminaires suggèrent qu'une production de 0,1 kg/s de blocs de gel est envisageable (360 kg/h). Des cuves respectivement de 1000 L pour la préparation d'alginate et de carbonate de calcium et de 200 L pour la solution tampon peuvent par exemple être utilisées. D'autres volumes de cuves sont bien évidemment envisageables, selon les volumes de production souhaités. En outre, la production à échelle industrielle selon ce procédé est envisageable en multipliant les sorties du dispositif, typiquement en multipliant les tés de mélange.

## Revendications

1. Procédé de préparation d'un bloc de gel comprenant les étapes suivantes :
- fourniture d'une préparation d'alginate et de carbonate de calcium,
- fourniture d'une solution tampon,
- mélange de la préparation d'alginate et de carbonate de calcium avec la solution tampon à l'aide d'un té de mélange comprenant un conduit de sortie, puis
- gélification dans un gélificateur formé par le conduit de sortie et/ou un conduit raccordé au conduit de sortie, pour former un bloc de gel.

2. Procédé selon la revendication 1, dans lequel le carbonate de calcium a une taille de particules inférieure à 40 µm.

3. Procédé selon la revendication 1 ou 2, dans lequel le ratio molaire alginate / carbonate de calcium est compris entre 0,2 et 1,8.

4. Procédé selon l'une quelconque des revendications 1 à 3, dans lequel le pH de la solution tampon est compris entre 3 et 6.

5. Procédé selon l'une quelconque des revendications 1 à 4, dans lequel le ratio volumique préparation d'alginate et de carbonate de calcium / solution tampon est compris entre 1 et 10.

6. Procédé selon l'une quelconque des revendications 1 à 5, dans lequel la préparation d'alginate et de carbonate de calcium et la solution tampon sont pompées en vue de leur mélange à l'aide d'une ou plusieurs pompes volumétriques.

7. Procédé selon l'une quelconque des revendications 1 à 6, dans lequel le gélificateur est un conduit droit.

8. Procédé selon l'une quelconque des revendications 1 à 7, dans lequel le gélificateur est un conduit cylindrique.

9. Procédé selon l'une quelconque des revendications 1 à 8, comprenant en outre une étape de distribution, dans laquelle un bloc de gel sort du gélificateur et est déposé sur une surface de réception.

10. Procédé selon l'une quelconque des revendications 1 à 9, comprenant en outre, à la sortie du gélificateur, une étape de découpe dans laquelle le gel est sectionné à des intervalles temporels ou de dimension prédéfinis.

## Patentansprüche

1. Verfahren zur Herstellung eines Gelblocks, umfassend die folgenden Schritte
- Bereitstellen einer Zubereitung aus Alginat und Calciumcarbonat,
- Bereitstellen einer Pufferlösung,
- Mischen der Alginat- und Calciumcarbonatzubereitung mit der Pufferlösung mithilfe eines Mischungs-Ts, das eine Auslassleitung umfasst, und dann
- Gelieren in einem Gelbildner, der durch die Auslassleitung und/oder eine mit der Auslassleitung verbundene Leitung gebildet wird, um einen Gelblock zu bilden.

2. Verfahren nach Anspruch 1, wobei das Calciumcarbonat eine Partikelgröße von weniger als 40 µm aufweist.

3. Verfahren nach Anspruch 1 oder 2, wobei das Molverhältnis von Alginat zu Calciumcarbonat zwischen 0,2 und 1,8 liegt.

4. Verfahren nach einem der Ansprüche 1 bis 3, wobei der pH-Wert der Pufferlösung zwischen 3 und 6 liegt.

5. Verfahren nach einem der Ansprüche 1 bis 4, wobei das Volumenverhältnis Alginat- und Calciumcarbonatzubereitung/Pufferlösung zwischen 1 und 10 liegt.

6. Verfahren nach einem der Ansprüche 1 bis 5, wobei die Alginat- und Calciumcarbonatzubereitung und die Pufferlösung zum Mischen mit einer oder mehreren volumetrischen Pumpen gepumpt werden.

7. Verfahren nach einem der Ansprüche 1 bis 6, wobei der Gelbildner ein gerades Rohr ist.

8. Verfahren nach einem der Ansprüche 1 bis 7, wobei der Gelbildner eine zylindrische Leitung ist.

9. Verfahren nach einem der Ansprüche 1 bis 8, ferner umfassend einen Verteilungsschritt, wobei ein Gelblock aus dem Gelbildner austritt und auf einer aufnehmenden Oberfläche abgelegt wird.

10. Verfahren nach einem der Ansprüche 1 bis 9, ferner umfassend am Ausgang des Gelbildners einen Schneideschritt, wobei das Gel in vorbestimmten Zeit- oder Größenintervallen abgetrennt wird.

## Claims

1. Method for preparing a gel block comprising the following steps:
- providing an alginate and calcium carbonate preparation,
- providing a buffer solution,
- mixing the alginate and calcium carbonate preparation with the buffer solution using a mixing tee comprising an outlet duct, and subsequently
- gelling in a gelator formed by the outlet duct and/or a duct connected to the outlet duct, to form a gel block.

2. Method according to claim 1, wherein the calcium carbonate has a particle size of less than 40 µm.

3. Method according to claim 1 or 2, wherein the molar ratio of alginate / calcium carbonate is comprised between 0.2 and 1.8.

4. Method according to any one of claims 1 to 3, wherein the pH of the buffer solution is comprised between 3 and 6.

5. Method according to any one of claims 1 to 4, wherein the volume ratio of alginate and calcium carbonate preparation / buffer solution is comprised between 1 and 10.

6. Method according to any one of claims 1 to 5, wherein the alginate and calcium carbonate preparation and the buffer solution are pumped with a view to the mixing thereof using one or more displacement pumps.

7. Method according to any one of claims 1 to 6, wherein the gelator is a straight duct.

8. Method according to any one of claims 1 to 7, wherein the gelator is a cylindrical duct.

9. Method according to any one of claims 1 to 8, further comprising a dispensing step, wherein a gel block comes out of the gelator and is deposited on a receiving surface.

10. Method according to any one of claims 1 to 9, further comprising, at the gelator outlet, a cutting step wherein the gel is cut at predefined time intervals or sizes.
